# EUROPÄISCHE PATENTSCHRIFT

(11) **EP 0 834 010 B1**
(45) Veröffentlichungstag und Bekanntmachung des Hinweises auf die Patenterteilung: **04.04.2001**
(21) Anmeldenummer: 96945985.8
(22) Anmeldetag: 13.11.1996
(51) Int. Cl.: F02M 25/08, F16K 31/06

(54) **MAGNETVENTIL**
MAGNET VALVE
ELECTRO-VANNE

(30) Priorität: 26.03.1996 DE 19611886
(43) Veröffentlichungstag der Anmeldung: 08.04.1998
(73) Patentinhaber: ROBERT BOSCH GMBH, 70442 Stuttgart (DE)
(72) Erfinder: KRIMMER, Erwin, D-73655 Plüderhausen (DE); SCHULZ, Wolfgang, D-74321 Bietigheim-Bissingen (DE); MIEHLE, Tilman, D-71394 Kernen (DE)
(86) Internationale Anmeldenummer: DE9602159
(87) Internationale Veröffentlichungsnummer: WO9736101

(56) Entgegenhaltungen:
- WO-A-96/35052
- DE-A- 4 244 113
- US-A- 5 269 278
- US-A- 5 413 082

## Beschreibung

### Stand der Technik

Die Erfindung geht aus von einem Magnetventil, insbesondere zur Tankentlüftung bei Kraftfahrzeugen, der im Oberbegriff des Anspruchs 1 definierten Gattung.

Bei einem bekannten Magnetventil dieser Art zum dosierten Einleiten von verflüchtigtem Brennstoff in den Ansaugkanal einer Brennkraftmaschine eines Kraftfahrzeugs (DE 42 44 113 A1) bildet der über die dem Magnetkern zugekehrte Seite des Ventilglieds überstehende zweite Dämpfungsabschnitt des am Ventilglied angeordneten Dämpferelements einen schmalen Ring, der aufgrund seines relativ geringen Querschnitts verschleißanfällig ist, so daß das Magnetventil mit zunehmendem Alter zu verstärkter Geräuscherzeugung neigt, da infolge Abnutzung des Rings beim Öffnen des Ventils metallische Teile aufeinanderschlagen. Zum Zwecke einer verbesserten Langzeit-Geäuschdämpfung kann aber die Wandstärke der hülsenförmigen Auskleidung der Durchtrittsöffnung im Ventilglied und damit der Querschnitt des überstehenden Rings nicht beliebig vergrößert werden, da dadurch die Magnetkraft des Elektromagnetens reduziert wird und schließlich nicht mehr für eine schnelle Ventilöffnung ausreicht.

### Vorteile der Erfindung

Das erfindungsgemäße Magnetventil mit den kennzeichnenden Merkmalen des Anspruchs 1 hat demgegenüber den Vorteil, daß durch die erfindungsgemäße Ausbildung der Axialnuten mehr Dämpfungsmaterial in dem zweiten Dämpfungsabschnitt untergebracht werden kann, ohne daß im Ventilglied ferromagnetisches Ankermaterial, das für einen ausreichenden Magnetfluß im Ventilglied zu dessen schneller Bewegung erforderlich ist, im nennenswerten Umfang verlorengeht. Zwischen den am Umfang der Durchgangsöffnung verteilt angeordneten Axialnuten verbleiben noch ausreichende Materialquerschnitte, so daß der magnetische Widerstand des Ventilglieds nur unwesentlich vergrößert wird. Gegenüber dem bekannten Magnetventil ist der zweite Dämpfungsabschnitt bei gleicher Wandstärke der Dämpfungsmaterialauskleidung in der Durchgangsöffnung um die zusätzlichen Dämpfungsflächen vergrößert, die sich auf der Stirnseite jeder Axialnut durch das dort vorstehende Dämpfungsmaterial ergeben. Darüber hinaus kann die Höhe des auf der Stirnseite überstehenden Materialrings der Durchgangsöffnungsauskleidung verkleinert werden, was einen Zuwachs an Magnetkraft mit sich bringt.

Durch die in den weiteren Ansprüchen aufgeführten Maßnahmen sind vorteilhafte Weiterbildungen und Verbesserungen des im Anspruch 1 angegebenen Magnetventils möglich.

Gemäß einer vorteilhaften Ausführungsform der Erfindung wird das Uberstandsmaß des Dämpfungsmaterials in den einzelnen Axialnuten über die dem Magnetkern zugekehrte Stirnseite des Ventilglieds mit 0,1 mm bemessen, während das Uberstandsmaß des ringförmigen zweiten Dämpfungsabschnitts auf der gleichen Stirnseite des Ventilglieds 0,2 mm beträgt. Dieser ringförmige Dämpfungsabschnitt wird dabei bevorzugt mit einem keilförmig zulaufenden Ringquerschnitt ausgebildet, wobei die Keilspitze von dem Ventilglied abgekehrt ist. Bevorzugt werden insgesamt vier, jeweils um 90° am Umfang der Durchgangsöffnung zueinander versetzt angeordnete Axialnuten vorgesehen, deren Nutbreite sehr viel kleiner als das Abstandsmaß der Axialnuten, in Umfangsrichtung gesehen, ist. Alle diese Maßnahmen der Bemessung und Formgebung führen zu einer Optimierung zwischen Langzeit-Geräuschdämpfung und der vom Elektromagneten aufzubringenden Maximalkraft zur schnellen Bewegung des Ventilglieds gegen die das Ventilglied belastende Federkraft.

### Zeichnung

Die Erfindung ist anhand eines in der Zeichnung dargestellten Ausführungsbeispiels in der nachfolgenden Beschreibung näher erläutert. Es zeigen:
- Fig. 1: einen Längsschnitt eines Tankentlüftungsventils,
- Fig. 2: eine vergrößerte Darstellung des Ausschnitts II in Fig. 1,

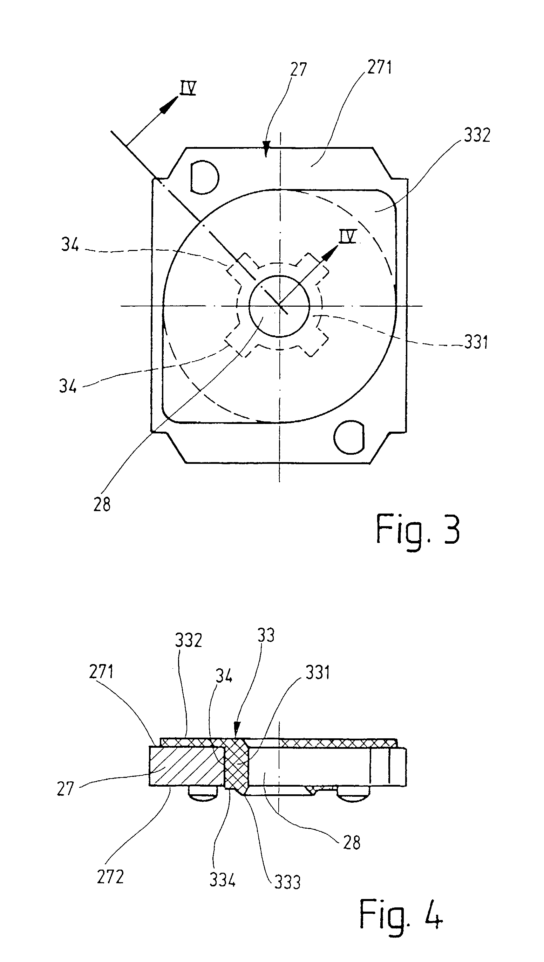

- Fig. 3: eine Draufsicht eines Ventilglieds im Ventil gemäß Fig. 1 oder 2,
- Fig. 4: eine Seitenansicht des Ventilglieds in Fig. 3, teilweise geschnitten längs der Linie IV-IV in Fig. 3.

### Beschreibung des Ausführungsbeispiels

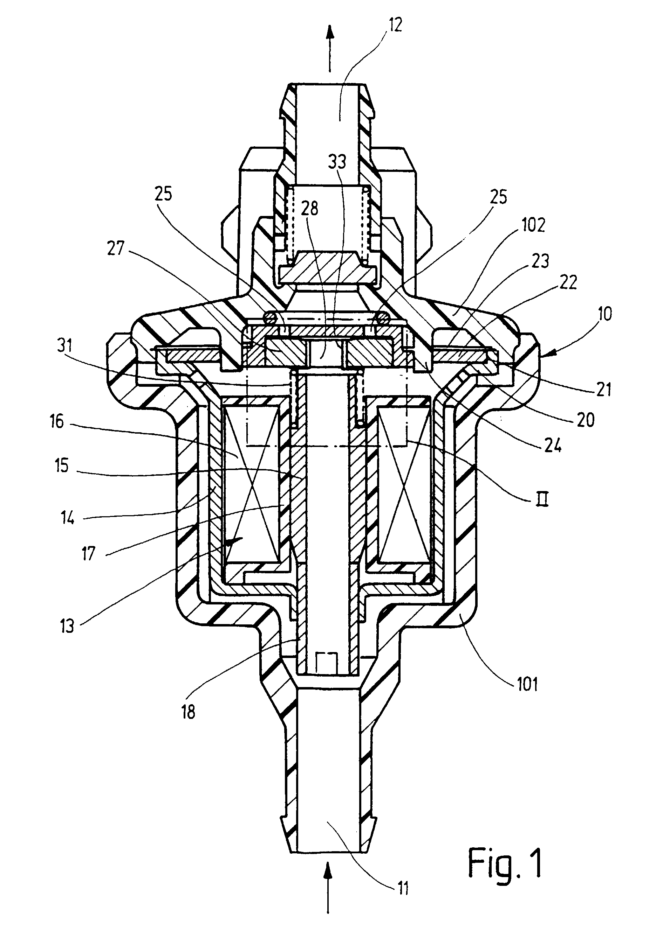

Das in Fig. 1 im Längsschnitt dargestellte Tankentlüftungsventil als Ausführungsbeispiel für ein beliebiges Magnetventil dient zum dosierten Zumischen von aus dem Brennstofftank einer gemischverdichtenden, fremdgezündeten Brennkraftmaschine verflüchtigtem Brennstoff zu einem der Brennkraftmaschine über einen Ansaugkanal zugeführten Brennstoff-Luftgemisch. Ein solches Tankentlüftungsventil ist in seinem prinzipiellen Aufbau und seiner Funktion beispielsweise in der DE 42 44 113 A1 beschrieben. Das Tankentlüftungsventil weist ein zweiteiliges Ventilgehäuse 10 mit einem topfförmigen Gehäuseteil 101 und einem diesen abschließenden, kappenförmigen Gehäuseteil 102 auf. Der Gehäuseteil 101 trägt einen Zuströmstutzen 11 zum Anschließen an einen Entlüftungsstutzen des Brennstofftanks oder an einen diesem nachgeschalteten, mit Aktivkohle gefüllten Speicher für den verflüchtigten Brennstoff, während der Gehäuseteil 102 einen Abströmstutzen 12 zum Anschließen an das Ansaugrohr an der Brennkraftmaschine trägt. Zuströmstutzen 11 und Abströmstutzen 12 sind miteinander fluchtend jeweils axial in den Gehäuseteilen 101, 102 angeordnet. Im Innern des topfförmigen Gehäuseteils 101 ist ein Elektromagnet 13 angeordnet.

Der Elektrommagnet 13 weist ein topfförmiges Magnetgehäuse 14 mit einem den Topfboden durchdringenden, koaxialen, hohlzylindrischen Magnetkern 15 und eine zylindrische Erregerspule 16 auf, die auf einem Spulenträger 17 sitzt, der im Magnetgehäuse 14 den Magnetkern 15 umschließt. Am Boden des Magnetgehäuses 14 ist ein nach außen vorspringender Gewindestutzen 18 mit einem Innengewinde ausgebildet, das mit einem Außengewindeabschnitt des hohlzylindrischen Magnetkerns 15 verschraubt ist. Der Magnetkern 15 kann damit durch Drehen im Magnetgehäuse 14 zu Justierzwecken axial verschoben werden. Der Magnetkern 15 fluchtet mit dem Zuströmstutzen 11, so daß der hier einströmende, verflüchtigte Brennstoff direkt den Magnetkern 15 durchströmt.

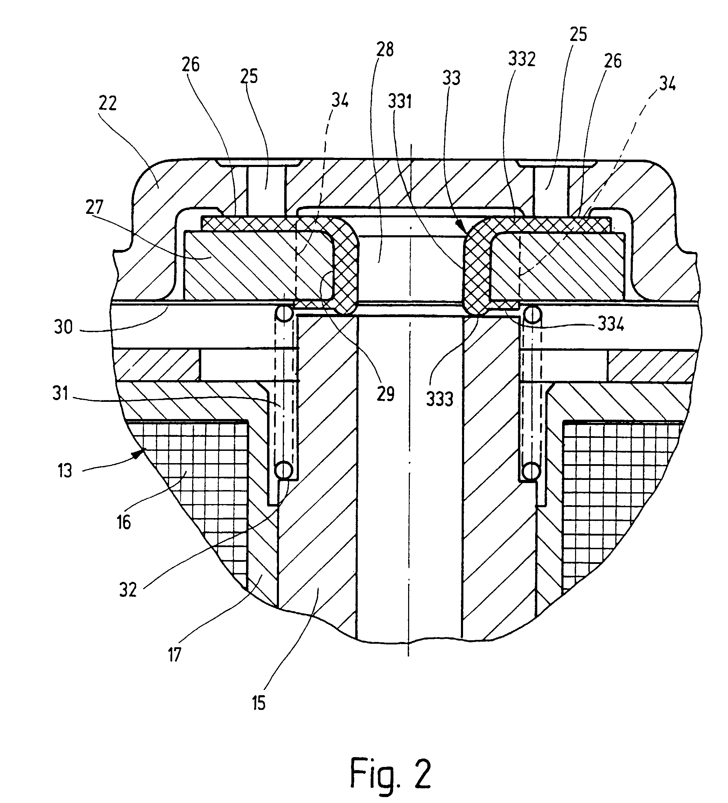

Der Rand des Magnetgehäuses 14 ist nach außen zu einem ringförmigen Auflageflansch 20 abgewinkelt, der endseitig zu einem axial vorstehenden Ringsteg 21 umgebogen ist. Im Auflageflansch 20 ist ein das Rückschlußjoch des Elektromagneten 13 bildender Ventilsitzkörper 22 aufgenommen, der das Magnetgehäuse 14 abdeckt und randseitig an dem Ringsteg 21 anliegt. Der Ventilsitzkörper 22 sitzt mittels wenigstens zweier Paßlöcher 23 auf im kappenförmigen Gehäuseteil 102 ausgebildeten Haltezapfen 24 auf und wird vom kappenartigen Gehäuseteil 102 paßgenau in dem Auflageflansch 20 festgeklemmt. Im Ventilsitzkörper 22 befinden sich zwei Ventilöffnungen 25 mit Ventilsitz 26, die mittels eines zwischen dem Ventilsitzkörper 22 und dem Magnetkern 15 angeordneten Ventilglieds 27 verschließbar sind. Zentral im Ventilglied 27 befindet sich koaxial zum hohlzylindrischen Magnetkern 15 eine axiale Durchgangsöffnung 28 mit einer Begrenzungswand 29, durch die vom Zuströmstutzen 11 herkommender, verflüchtigter Brennstoff bei geöffneten Ventilöffnungen 25 zum Abströmstutzen 12 gelangen kann. Das aus magnetisch leitendem Material hergestellte Ventilglied 27 bildet zugleich den Anker des Elektromagneten 13 und ist an einer Blattfeder 30 befestigt, die randseitig zwischen dem Ventilsitzkörper 22 und dem Auflageflansch 20 eingespannt ist. Das Ventilglied 27 ist von einer Ventilschließfeder 31 in Ventilschließrichtung beaufschlagt, die sich einerseits am Ventilglied 27 und andererseits an einer ringförmigen Stützschulter 32 abstützt, die auf der Außenwand des Magnetkerns 15 ausgebildet ist (Fig. 2).

Das Ventilglied 27 ist mit einem Dämpferelement 33 aus elastischem Dämpfungsmaterial, z.B. Elastomer, versehen, das - wie in Fig. 2 besonders deutlich zu sehen ist - die Durchgangsöffnung 28 im Ventilglied 27 auskleidend mit einem Hülsenabschnitt 331 die Begrenzungswand 29 der Durchgangsöffnung 28 bedeckt und einerseits in einen auf der dem Ventilsitzkörper 22 zugekehrten ersten Stirnfläche 271 des Ventilglieds 27 sich flächenartig erstreckenden ersten Dämpfungsabschnitt 332 und andererseits in einen über die dem Magnetkern 15 zugekehrte zweite Stirnseite 272 des Ventilglieds 27 überstehenden zweiten Dämpfungsabschnitt 333 übergeht. Die Fläche des ersten Dämpfungsabschnitts 332 ist mindestens so groß, daß der erste Dämpfungsabschnitt 332 bei geschlossenem Ventil die Ventilsitze 26 der beiden Ventilöffnungen 25 überdeckt. Das Überstandsmaß des zweiten ringförmigen Dämpfungsabschnitts 333 über die zweite Stirnseite 272 des Ventilglieds 27 ist bevorzugt mit 0,2 mm gewählt. Der Ringquerschnitt ist keilförmig zulaufend ausgebildet, wobei die abgerundete Keilspitze von dem Ventilglied 27 abgekehrt ist.

In die Begrenzungswand 29 der Durchgangsöffnung 28 sind vier um jeweils 90° Umfangswinkel gegeneinander versetzt angeordnete, längsdurchgehende Axialnuten 34 eingebracht, die zur Durchgangsöffnung 28 hin offen sind. Diese Axialnuten 34 sind mit dem elastischen Dämpfungsmaterial des Dämpferelements 33 vollständig ausgefüllt, wobei das Dämpfungsmaterial über die zweite Stirnfläche 272 des Ventilglieds 27 mit einem Überstandsmaß von 0,1 mm übersteht und somit vier weitere einzelne Dämpfungsflächen 334 des Dämpferelements 33 bildet. Die Breite der vier Axialnuten 34 ist sehr viel kleiner, z.B. weniger als halb so groß als das in Umfangsrichtung gesehene Abstandsmaß der Axialnuten 34 voneinander gemacht, so daß zwischen den materialgefüllten Axialnuten 34 noch genügend ferromagnetisches Material für den Magnetfluß vorhanden ist.

Das beschriebene Magnetventil ist bei unerregtem Elektromagneten 13 geschlossen, indem die Ventilschließfeder 31 das Ventilglied 27 auf die Ventilsitze 26 an den Ventilöffnungen 25 aufpreßt. Zum Öffnen des Ventils wird der Elektromagnet 13 erregt, und die Magnetkraft zieht das Ventilglied 27 weg vom Ventilsitzkörper 22 zum Magnetkern 15. Das Dämpferelement 33 verhindert, daß metallische Teile des Ventilglieds 27 auf den Magnetkern 15 oder auf die Ventilsitze 26 aufschlagen und dadurch Schaltgeräusche verursachen. Das Dämpferelement 33 ist auf das aus ferromagnetischem Material bestehende Ventilglied 27 aufvulkanisiert, wobei die vorstehend beschriebenen einzelnen Abschnitte 331 - 334 des Dämpferelements 33 einstückig zusammenhängen.

## Patentansprüche

1. Magnetventil, insbesondere zur Tankentlüftung bei Kraftfahrzeugen, mit einem Ventilsitzkörper (22), der mindestens eine Ventilöffnung (25) mit Ventilsitz (26) aufweist, mit einem mit dem Ventilsitz (26) zur Freigabe und Verschließen der Ventilöffnung (25) zusammenwirkenden, federbelasteten Ventilglied (27), das einen Magnetanker eines Elektromagneten (13) bildend zwischen dem ein Rückschlußjoch des Elektromagneten (13) darstellenden Ventilsitzkörper (22) und einem hohlzylindrischen Magnetkern (15) des Elektromagneten (13) angeordnet ist und eine zur Magnetkernachse koaxiale Durchgangsöffnung (28) aufweist, und mit einem am Ventilglied (27) angeordneten Dämpferelement (33) aus Dämpfungsmaterial, das die Durchgangsöffnung (28) hülsenförmig auskleidet und in einen auf der dem Ventilsitzkörper (22) zugekehrten ersten Stirnseite (271) des Ventilglieds (27) angeordneten ersten Dämpfungsabschnitt (332), der mindestens so groß wie der Ventilsitz (26) ist, und in einen über die den Magnetkern (15) zugekehrte zweite Stirnseite (272) des Ventilglieds (27) überstehenden zweiten Dämpfungsabschnitt (333) übergeht, dadurch gekennzeichnet, daß im Ventilglied (27) zur Durchgangsöffnung (28) hin offen, über deren Umfang verteilt angeordnete, längsdurchgehende Axialnuten (34) eingebracht und mit Dämpfungsmaterial ausgefüllt sind, das über die zweite Stirnfläche (272) des Ventilglieds (27) übersteht.

2. Magnetventil nach Anspruch 1, dadurch gekennzeichnet, daß das Uberstandsmaß des Dämpfungsmaterials aus den Axialnuten (34) 0.1 mm beträgt.

3. Magnetventil nach Anspruch 1 oder 2, dadurch gekennzeichnet, daß das Abstandsmaß der Axialnuten (34) voneinander ein Vielfaches ihrer Nutbreite beträgt.

4. , Magnetventil nach Anspruch 3, dadurch gekennzeichnet, daß insgesamt vier, jeweils um 90° am Umfang der Durchgangsöffnung (28) zueinander versetzt angeordnete Axialnuten (34) vorhanden sind.

5. Magnetventil nach einem der Ansprüche 1 - 4, dadurch gekennzeichnet, daß das Uberstandsmaß des ringförmigen zweiten Dämpfungsabschnitts (333) 0,2 mm beträgt.

6. Magnetventil nach Anspruch 5, dadurch gekennzeichnet, daß der ringförmige Dämpfungsabschnitt (333) einen keilförmig zulaufenden Ringquerschnitt aufweist, wobei die abgerundete Keilspitze von dem Ventilglied (27) abgekehrt ist.

7. Magnetventil nach einem der Ansprüche 1 - 6, dadurch gekennzeichnet, daß das die Axialnuten (34) ausfüllende Dämpfungsmaterial mit dem die Auskleidung (331) der Durchgangsöffnung (28) und die beiden Dämpfungsabschnitte (332,333) bildenden Dämpfungsmaterial einstückig ist.

8. Magnetventil nach Anspruch 7, dadurch gekennzeichnet, daß das Dämpfungsmaterial ein Elastomer und auf das aus ferromagnetischem Material bestehende Ventilglied (27) aufvulkanisiert ist.

## Claims

1. Solenoid valve, in particular for tank venting in motor vehicles, having a valve-seat body (22) which has at least one valve opening (25) with valve seat (26), having a spring-loaded valve member (27) which interacts with the valve seat (26) for clearing and closing the valve opening (25), is arranged so as to form an armature of an electromagnet (13) between the valve-seat body (22), constituting a return yoke of the electromagnet (13), and a hollow-cylindrical magnet core (15) of the electromagnet (13) and has a through-opening (28) coaxial to the magnet-core axis, and having a damper element (33) which is arranged on the valve member (27), is made of a damping material, lines the through-opening (28) in a sleeve shape and merges into a first damping section (332), which is arranged on the first end face (271), facing the valve-seat body (22), of the valve member (27) and is at least as large as the valve seat (26), and into a second damping section (333) projecting beyond the second end face (272), facing the magnet core (15), of the valve member (27), characterized in that longitudinally continuous axial slots (34) which are open towards the through-opening (28) and are arranged so as to be distributed over the periphery of the latter are made in the valve member (27) and are filled with damping material, which projects beyond the second end face (272) of the valve member (27).

2. Solenoid valve according to Claim 1, characterized in that the projecting length of the damping material from the axial slots (34) is 0.1 mm.

3. Solenoid valve according to Claim 1 or 2, characterized in that the distance between the axial slots (34) is a multiple of their width.

4. Solenoid valve according to Claim 3, characterized in that there are a total of four axial slots (34) in each case arranged so as to be offset from one another by 90° on the periphery of the through-opening (28).

5. Solenoid valve according to one of Claims 1 to 4, characterized in that the projecting length of the ring-shaped second damping section (333) is 0.2 mm.

6. Solenoid valve according to Claim 5, characterized in that the ring-shaped damping section (333) has a ring cross section tapering in a wedge shape, the rounded-off wedge tip facing away from the valve member (27).

7. Solenoid valve according to one of Claims 1 to 6, characterized in that the damping material filling the axial slots (34) is in one piece with the damping material forming the lining (331) of the through-opening (28) and the two damping sections (332, 333).

8. Solenoid valve according to Claim 7, characterized in that the damping material is an elastomer and is vulcanized in place on the valve member (27), which is made of a ferromagnetic material.

## Revendications

1. Electrovanne, en particulier pour dégazer les réservoirs de véhicules automobiles, dans laquelle :
• un corps de siège de soupape (22) comporte au moins une ouverture de soupape (25) équipée d'un siège de soupape (26) coopérant avec un organe de soupape (27) chargé élastiquement, pour libérer ou fermer l'ouverture de soupape (25),
• l'organe de soupape (27) formant l'induit d'un électroaimant (13) est monté entre le corps de siège de soupape (22) constituant une culasse de reflux de l'électroaimant (13) et le noyau cylindrique creux (15) de l'électro-aimant, et il est percé d'une ouverture de passage (28) coaxiale au noyau magnétique (15),
• sur l'organe de soupape (27) est monté un élément amortisseur (33) constitué par un matériau amortisseur disposé sur l'ouverture de passage (28) de manière à constituer un revêtement en forme de douille, qui se prolonge sur la première face frontale (271) de l'organe de soupape (27) tournée vers le corps de siège de soupape (22) par une première partie d'amortissement (332) au moins aussi grande que le siège de soupape (27), et par une seconde partie d'amortissement (333) en saillie sur la seconde face frontale (272) de l'organe de soupape (27) tournée vers le noyau magnétique (15),
caractérisée en ce que
l'organe de soupape (27) porte, réparties à la périphérie de l'ouverture de passage (28) et ouvertes sur celles-ci, des rainures axiales continues (34), remplies d'un matériau amortisseur, celui-ci faisant saillie sur la seconde face frontale (272) de l'organe de soupape (27).

2. Electrovanne selon la revendication 1,
caractérisée en ce que
la saillie du matériau d'amortissement contenu dans les rainures axiales (34) est de 0,1 mm.

3. Electrovanne selon la revendication 1 ou 2,
caractérisée en ce que
l'espacement entre les rainures axiales (34) est un multiple de leur largeur.

4. Electrovanne selon la revendication 3,
caractérisée en ce qu'
il est prévu en tout quatre rainures axiales (34), disposées à la périphérie de l'ouverture de passage (28) avec un espacement angulaire de 90°.

5. Electrovanne selon l'une quelconque des revendications 1 à 4,
caractérisée en ce que
la seconde partie d'amortissement (333), de forme annulaire, est en saillie de 0,2 mm.

6. Electrovanne selon la revendication 5,
caractérisée en ce que
la partie d'amortissement (333) de forme annulaire présente une section ayant la forme d'un coin dont la pointe arrondie est dirigée à l'opposé de l'organe de soupape (27).

7. Electrovanne selon l'une quelconque des revendications 1 à 6,
caractérisée en ce que
le matériau amortisseur remplissant les rainures axiales (34) constitue avec le revêtement (331) de l'ouverture de passage (28) et les deux parties d'amortissement (332, 333) un ensemble monobloc.

8. Electrovanne selon la revendication 7,
caractérisée en ce que
le matériau amortisseur est un élastomère et il est vulcanisé sur le matériau ferromagnétique constituant l'organe de soupape (27).
